# DEMANDE DE BREVET EUROPEEN

(11) **EP 4 592 049 A1**
(43) Date de publication de la demande: **30.07.2025**
(21) Numéro de dépôt: 25305123.9
(22) Date de dépôt: 29.01.2025
(51) Int. Cl.: B29C 33/38, B29C 35/00, H01M 8/0276, H01M 8/0284, B29C 43/36, B29C 43/00, B29C 43/18, H01M 8/0286, B29C 43/58

(54) **PROCÉDÉ DE FORMATION ET POLYMÉRISATION D'UN JOINT SUR UNE PLAQUE MÉTALLIQUE**

(30) Priorité: 29.01.2024 FR 2400857
(71) Demandeur: Safran Power Units, 31200 Toulouse (FR); Sealicone, 59560 Comines (FR)
(72) Inventeur: ABBOU, Sofyane, 77550 MOISSY-CRAMAYEL (FR); RAYNAL, Patrick Didier, 77550 MOISSY-CRAMAYEL (FR); TORRIS, Antoine Marie, 59560 COMINES (FR)
(74) Mandataire: Regimbeau

(57) **Abrégé**

L'invention concerne un procédé de formation et polymérisation d'un joint sur une plaque métallique au moyen d'un moule double coque (50), le procédé comprenant les étapes suivantes :
- déposer le joint (36, 40) sur au moins une de la première face (64) et de la deuxième face (66) de la plaque métallique (20),
- positionner la première coque (51) au contact de la première face (64) et la deuxième coque (52) au contact de la deuxième face (66) de sorte que la plaque métallique (20) soit positionnée dans la cavité (58) délimitée par la première coque (51) et la deuxième coque (52), et
- appliquer une pression de manière à presser simultanément la première coque (51) contre la première face (64) et la deuxième coque (52) contre la deuxième face (66) pour permettre la polymérisation du joint (36, 40).

## Description

### DOMAINE DE L'INVENTION

La présente invention concerne un moule pour polymérisation d'un joint sur une plaque métallique, notamment une plaque bipolaire pour pile à combustible, ainsi qu'un procédé de polymérisation du joint sur ladite plaque métallique au moyen dudit moule.

### ARRIERE-PLAN TECHNOLOGIQUE

Les piles à combustible sont des réacteurs électrochimiques qui permettent de produire une tension électrique grâce à l'oxydation d'un combustible réducteur, comme par exemple du dihydrogène, sur une électrode, et à la réduction d'un comburant oxydant, comme par exemple l'oxygène de l'air, sur l'autre électrode.

Il existe notamment des piles à combustible à membrane échangeuse de protons (connues sous l'anglicisme « Exchange Membrane Fuel Cell » ou PEMFC). Ces piles à combustible sont constituées d'un empilement de plusieurs cellules comportant chacune un électrolyte conducteur d'ions entouré de deux électrodes. Dans le cas des piles de type PEMFC, l'électrolyte conducteur d'ions est une membrane polymère conductrice de protons et les électrodes sont constituées d'un milieu poreux porteur d'un catalyseur tel que du platine, l'ensemble électrolyte et électrodes étant appelé assemblage membrane électrode (AME). Chaque AME est mis au contact de gaz réactifs sur ses deux faces opposées (par exemple de l'hydrogène et de l'air) grâce à des plaques d'interconnexion aussi appelées plaques bipolaires.

Une plaque bipolaire se trouve ainsi intercalée entre la cathode d'un premier AME et l'anode d'un deuxième AME adjacent au premier AME. Ainsi une plaque bipolaire alimente le premier AME en comburant (air) à sa cathode et le deuxième AME en combustible réducteur (notamment l'hydrogène) à son anode. De plus, à l'intérieur de la plaque bipolaire peut être aménagé un circuit de refroidissement dans lequel circule un fluide caloporteur pouvant être liquide ou gazeux et servant à apporter de la chaleur pour permettre une réaction endothermique ou, au contraire, à extraire de la chaleur produite par une réaction exothermique. Le couple plaque bipolaire/AME constitue une cellule et une pile à combustible est formée d'un empilement de plusieurs cellules.

L'empilement des cellules est maintenu entre deux plaques terminales qui appliquent une pression uniforme sur l'ensemble des cellules. Par ailleurs, l'empilement de cellules comporte des cheminées qui s'étendent entre les deux plaques terminales et traversent chaque plaque bipolaire et chaque AME de l'empilement au moyen d'ouvertures ménagées dans les plaques bipolaires et les AME. Ces cheminées permettent de transporter les fluides réactifs (par exemple l'hydrogène et l'air), les fluides à évacuer (par exemple l'eau) et le fluide caloporteur.

L'empilement des cellules comporte également des joints d'étanchéité positionnés à la surface des plaques bipolaires, notamment à la périphérie desdites plaques et autour des cheminées afin d'assurer l'étanchéité de manière que les fluides ne fuient pas et ne se mélangent pas. L'étanchéité doit donc être efficace pour permettre un bon fonctionnement de la pile à combustible.

Plusieurs méthodes existent dans l'art antérieur pour la pose et la polymérisation de joints sur les plaques bipolaires. Une méthode consiste à déposer une composition pour joint sur la plaque bipolaire puis de placer la plaque bipolaire dans une étuve de manière à polymériser la composition et former le joint. Un inconvénient de cette méthode est qu'il est difficile d'obtenir des joints présentant la forme et l'épaisseur voulue. Par ailleurs, les joints d'une face et de l'autre face ne peuvent pas être réalisés simultanément.

Une autre méthode consiste à utiliser un moule double coque pour former le joint sur la plaque bipolaire. Selon une première variante de cette méthode, une composition pour joint est déposée sur la plaque bipolaire comme dans la méthode précédemment décrite puis la plaque bipolaire est positionnée dans un moule double coque. La plaque bipolaire est alors comprimée entre les deux coques du moule tout en chauffant de manière à polymériser la composition et former le joint. Selon une deuxième variante de cette méthode, la composition pour joint est déposée directement dans le moule puis la plaque bipolaire est positionnée dans le moule. Cette méthode permet au joint d'avoir la forme et l'épaisseur souhaitée. Cependant, la pression exercée sur la plaque bipolaire peut être importante et certaines zones de la plaque bipolaire étant fines, cette méthode peut endommager la plaque bipolaire.

### EXPOSE DE L'INVENTION

Un objectif de l'invention est donc de concevoir un moule permettant d'améliorer la manière de former les joints sur la plaque bipolaire de sorte que lesdits joints présentent une forme et/ou une épaisseur optimisée.

Un autre objectif de l'invention et que les joints formés permettent une étanchéité efficace pour éviter les fuites des différents fluides circulant au travers de l'empilement des cellules.

L'invention a également pour objectif d'éviter que la plaque ne soit endommagée, notamment déformée ou coupée, lors de la polymérisation du joint en utilisant le moule.

A cet effet, l'invention a pour objet un procédé de formation et polymérisation d'un joint sur une plaque métallique au moyen d'un moule double coque.

La plaque métallique est notamment une plaque bipolaire pour pile à combustible et comporte une première face et une deuxième face opposée à la première face.

Le moule double coque, comporte au moins une première coque possédant une première surface intérieure et une deuxième coque possédant une deuxième face intérieure, la première coque et la deuxième coque étant configurées pour pouvoir être jointes l'une à l'autre en positionnant la première surface intérieure et la deuxième surface intérieure en vis-à-vis de sorte à délimiter une cavité pouvant accueillir la plaque métallique, la première coque et la deuxième coque étant formées en un matériau principal et, au moins une de la première coque et de la deuxième coque comportant, sur au moins une partie de sa surface intérieure, un revêtement formé en un matériau d'amortissement possédant une dureté inférieure à la dureté du matériau principal.

Le procédé comporte les étapes suivantes :
- déposer le joint sur au moins une de la première face et de la deuxième face de la plaque métallique,
- positionner la première coque au contact de la première face et la deuxième coque au contact de la deuxième face de sorte que la plaque métallique soit positionnée dans la cavité délimitée par la première coque et la deuxième coque, et
- appliquer une pression de manière à presser simultanément la première coque contre la première face et la deuxième coque contre la deuxième face pour permettre la polymérisation du joint.

Le procédé permet de polymériser le(s) joint(s) déposé(s) sur la plaque métallique en lui (leur) conférant la forme et/ou l'épaisseur voulue, et ce, tout en évitant d'endommager la plaque métallique.

Avantageusement, le matériau d'amortissement résiste à des températures allant de 100 à 180 °C et n'est pas endommagé lors du procédé. La première et la deuxième coques peuvent être réutilisées un grand nombre de fois.

Le revêtement permet que la pression exercée sur la première et/ou la deuxième coque(s) lors de la polymérisation du joint n'endommage pas la plaque métallique et ne déforme pas le joint, notamment avant qu'il ne soit polymérisé. Il est ainsi possible de déposer une composition pour joint sur la plaque métallique et de polymériser cette composition de manière à former un joint ayant la forme et/ou de l'épaisseur souhaitée(s).

Selon un mode de réalisation préféré, la plaque métallique est une plaque bipolaire et le(s) joint(s), une fois polymérisés, permet(tent) d'assurer une étanchéité optimisée lorsque la plaque bipolaire est utilisée dans une pile à combustible.

Le revêtement est de préférence positionné au moins sur les zones de la première et de la deuxième surfaces intérieures qui sont au contact avec le(s) joint(s) à polymériser et/ou avec des parties fragiles de la plaque métallique, notamment les portions les plus fines. Selon une variante possible, le revêtement peut couvrir des zones plus étendues, comme par exemple toute la première surface intérieure et/ou toute la deuxième surface intérieure.

Par ailleurs, le matériau principal possède une rigidité suffisante de sorte que la première et/ou la deuxième coque(s) garde(nt) leur forme malgré la pression exercée lors de la polymérisation au moyen du moule et que la pression soit transmise de manière homogène sur une grande partie, voire la totalité, de la première surface intérieure et/ou de la deuxième surface intérieure.

De préférence, le matériau d'amortissement ne possède pas de propriété d'adhésion avec le matériau composant le joint, que ce soit avant, pendant ou après polymérisation. Ainsi, le matériau d'amortissement ne risque pas de se coller sur le joint ou de fusionner avec ce dernier. De même, le joint ne risque pas de rester collé au matériau d'amortissement ou de fusionner avec ce dernier. Ainsi, une fois la polymérisation terminée, la première et la deuxième coques peuvent être dissociée(s) de la plaque métallique et du(des) joint(s) en laissant le revêtement d'amortissement et le(s) joint(s) intègres.

Selon des modes de réalisation particuliers de l'invention pouvant être pris seuls ou en combinaison :
- la cavité accueillant la plaque métallique est soumise à une température d'au moins 100° C lorsque la pression est exercée pour la polymérisation du joint ; Une telle température permet une polymérisation optimisée du(des) joint(s) ;
- la pression appliquée sur chacune de la première coque et de la deuxième coque présente une valeur allant de 500Kg à 10000Kg, de préférence de 1000Kg à 3000Kg ; une telle pression permet une polymérisation optimisée du(des) joint(s) tout en lui conférant la forme et l'épaisseur voulue, et ce, sans endommager la plaque métallique ;
- la plaque métallique est une plaque bipolaire pour pile à combustible ;
- le matériau d'amortissement comporte au moins un élastomère ; un tel matériau permet au revêtement d'amortissement d'absorber une partie de la pression exercée par la première et/ou la deuxième coque(s) sur la plaque métallique tout en gardant une forme homogène permettant de conférer au joint la forme souhaitée ;
- le matériau d'amortissement peut comprendre au moins un élastomère choisi parmi les silicones, les flurosilicones, les téflons, les polyuréthanes, les caoutchouc d'éthylène-propylène-diène monomère (ou d'EPDM), les nitriles, les néoprènes, ou un de leurs mélanges ;
- le matériau d'amortissement peut comprendre au moins un silicone choisi parmi le caoutchouc de silicone liquide (connu sous l'anglicisme « liquid silicone rubber », LSR) ou le caoutchouc de silicone à haute consistance (connu sous l'anglicisme « high consistency rubber », HCR) ;
- le matériau d'amortissement présente une dureté allant de 35 à 65 shore A ; une telle dureté permet au matériau d'amortissement d'être suffisamment rigide pour donner au joint la forme voulue et suffisamment souple pour absorber une partie de la pression exercée par la première et/ou de la deuxième coque(s) sur la plaque métallique de sorte que la plaque métallique ne soit pas endommagée ; la dureté peut notamment être mesurée selon la norme ISO7619-1 ;
- le revêtement possède une épaisseur allant de 0,3 à 10 mm ; une telle épaisseur permet au revêtement d'avoir une capacité d'amortissement suffisante ; l'épaisseur peut être choisie notamment en fonction des propriétés du matériau d'amortissement, en particulier de sa dureté ;
- le revêtement comporte une première portion possédant une première épaisseur, la première portion étant configurée pour être au contact de la plaque métallique lorsque la plaque métallique est accueillie dans la cavité, et une deuxième portion possédant une deuxième épaisseur, la deuxième portion étant configurée pour être au contact du joint à polymériser lorsque la plaque métallique présente dans la cavité comporte le joint à polymériser, la première épaisseur étant supérieure à la deuxième épaisseur ; l'épaisseur est ainsi plus importante lorsque le revêtement est destiné à être placé directement contre la plaque métallique et moins importante lorsque le joint est positionné entre le revêtement et la plaque métallique ; en effet, lorsque le revêtement est en contact direct en le joint, ce dernier contribue à amortir une partie de la pression exercée par la première et/ou la deuxième coque sur la plaque métallique et l'épaisseur du revêtement peut être moindre ;
- l'une et l'autre de la première coque et de la deuxième coque(s) possèdent le revêtement en un matériau d'amortissement ; ceci permet de former le(s) joint(s) simultanément sur chacune des deux faces de la plaque d'amortissement ; et
- le revêtement de la première coque est identique au revêtement de la deuxième coque.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- La figure 1 est une vue schématique et en perspective d'une pile à combustible selon un mode de réalisation ;
- La figure 2 est une vue schématique et en perspective d'un empilement de cellule de la pile à combustible de la figure 1 ;
- La figure 3 est une vue schématique et en perspective de l'assemblage de deux plaques métalliques pour former une plaque bipolaire d'une pile selon les figures 1 et 2 ;
- La figure 4 est une vue schématique en coupe transversale d'une plaque bipolaire insérée dans un moule selon un mode de réalisation de l'invention.
- La figure 5a est une vue schématique en coupe d'une coque de moule selon un premier mode de réalisation de l'invention ;
- La figure 5b est une vue schématique en coupe d'une coque de moule selon un deuxième mode de réalisation de l'invention ; et
- La figure 5c est une vue schématique en coupe transversale d'une coque de moule selon un troisième mode de réalisation de l'invention.

### DESCRIPTION DETAILLEE D'UN EXEMPLE DE REALISATION

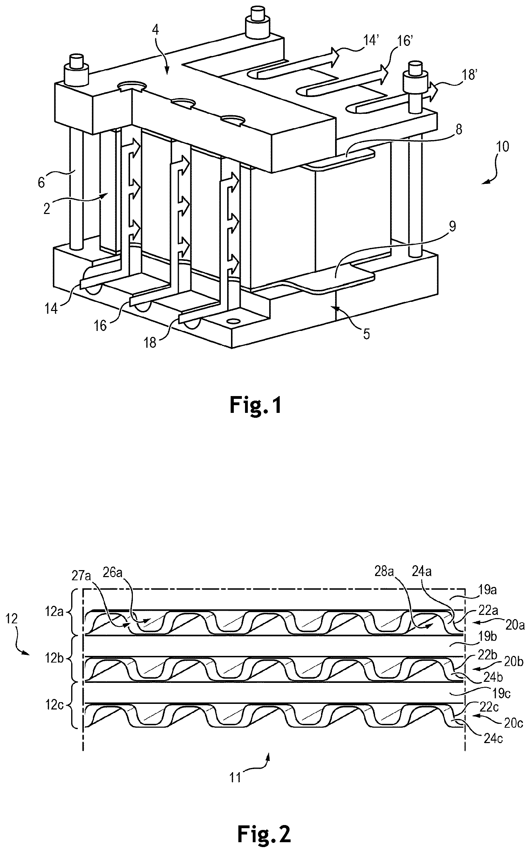

En référence aux figures 1 et 2, une pile à combustible 10 selon un mode de réalisation de l'invention comporte un empilement 2 de cellules 12, ledit ensemble étant maintenu entre une première plaque terminale 4 et une deuxième plaque terminale 5. La première et la deuxième plaques terminales 4 et 5 appliquent une pression uniforme sur l'ensemble de cellules au moyen d'une structure de maintien 6.

L'empilement 2 de cellules 12 est traversé par une première cheminée 14, une deuxième cheminée 16 et une troisième cheminée 18. Dans ce mode de réalisation, la première cheminée 14 transporte de l'hydrogène jusqu'à une première sortie 14', la deuxième cheminée transporte un fluide caloporteur jusqu'à une deuxième sortie 16', et la troisième cheminée transporte de l'air jusqu'à une troisième sortie 18'.

Par ailleurs, un premier collecteur 8 est disposé entre l'empilement 2 et la première plaque terminale 4 et un deuxième collecteur 9 est disposé entre l'empilement 2 et la deuxième plaque terminale 5. Le premier et le deuxième collecteurs 8 et 9 permettent de récupérer le courant électrique généré par l'empilement 2 de cellules 12.

La figure 2 représente un ensemble 11 de trois cellules 12, à savoir les cellules 12a, 12b, et 12c, qui forme une partie de l'empilement 2, une cellule étant formée par un assemblage membrane électrode (AME) 19 et une plaque bipolaire 20.

L'ensemble 11 de cellules 12 comporte trois AME 19a, 19b et 19c comprenant chacune un électrolyte conducteur d'ions (non représenté) entouré de deux électrodes (non représentées), les électrodes étant une anode et une cathode.

L'ensemble 11 comporte également trois plaques bipolaires 20a, 20b et 20c chacune formée par une première plaque métallique 22a (b,c) et une deuxième plaque métallique 24a (b,c).

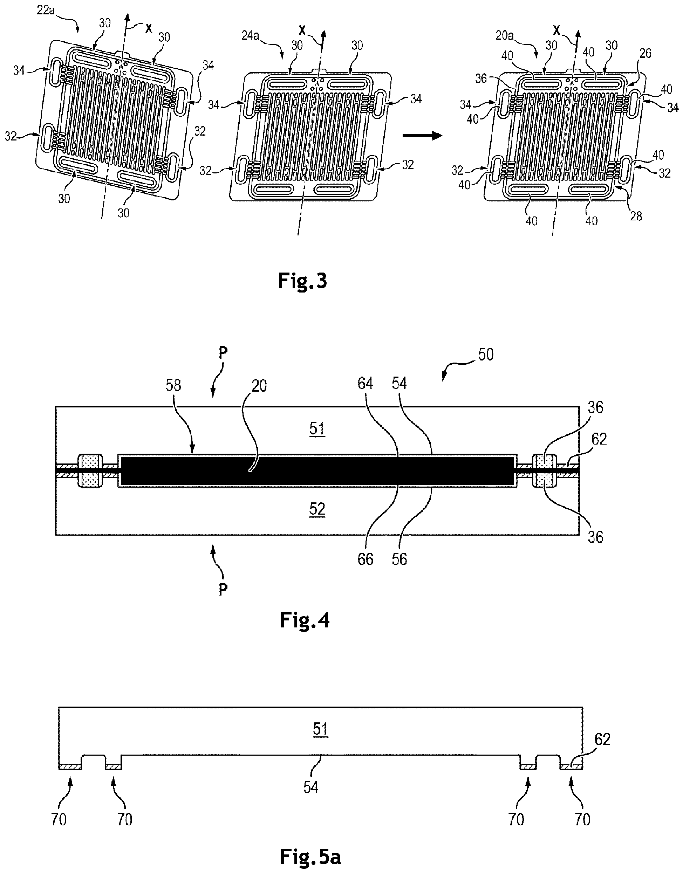

En référence aux figures 2 et 3, la première et la deuxième plaque métalliques 22a et 24a comportent une alternance de sillons et de nervures qui s'étendent de manière parallèle les uns aux autres selon un axe X. La première et la deuxième plaques 22a et 24a sont positionnées en vis-à-vis en plaçant les nervures d'une plaque en regard des sillons de l'autre plaque tout en laissant un espace entre les deux plaques. La première et la deuxième plaques métalliques 22a et 24a sont alors soudées l'une à l'autre pour former la plaque bipolaire 20a. La soudure est réalisée le long d'une ligne de soudure non représentée de chaque plaque métalliques 22a et 24a. De cette manière, un circuit dans lequel peut circuler un liquide de refroidissement est formé entre les deux plaques métalliques 22a et 24a de la plaque bipolaire 20a.

Le positionnement de la première et de la deuxième plaques métalliques 22a et 24a l'une par rapport à l'autre permet également de former des premiers tunnels d'acheminements 26a de fluide entre chaque plaque bipolaire 20a (b,c) et l'AME qui lui est supérieur 19a (b) et également des deuxièmes tunnels d'acheminement 28a de fluide entre chaque plaque bipolaire 20a (b,c) et l'AME qui lui est inférieur 19b (c).

Dans ce mode de réalisation, les premiers tunnels d'acheminement 26a de fluide permettent la circulation d'hydrogène qui est ainsi en contact avec l'anode de l'AME 19a, et les deuxièmes tunnels d'acheminement 28a de fluide permettent la circulation d'air qui est ainsi en contact avec la cathode de l'AME 19b.

Par ailleurs, comme illustré sur la figure 3, chaque plaque comporte des orifices formant la première cheminée 14, la deuxième cheminée 16 et la troisième cheminée 18. Chaque plaque métallique 22 comporte ainsi quatre orifices 30 de circulation du fluide de refroidissement, deux orifices 34 de circulation d'hydrogène et deux orifices 32 de circulation d'air.

Le plaque bipolaire 20 comporte un joint périphérique 36. Les quatre orifices 30 de circulation du fluide de refroidissement sont positionnés à l'intérieur du joint périphérique 36 de sorte que le fluide puisse circuler à l'intérieur de la plaque bipolaire 20.

Les deux orifices 34 de circulation d'hydrogène et deux orifices 32 de circulation d'air sont positionnées à l'extérieur du joint périphérique 36 et permettent d'alimenter en fluide les premiers et deuxièmes conduits de circulation 26 et 28.

Le joint périphérique d'une face de la plaque bipolaire 20 permet d'éviter toute fuite d'hydrogène hors des premiers tunnels d'acheminement et le joint périphérique de l'autre face permet d'éviter tout fuite d'air hors des deuxièmes tunnels d'acheminement.

Par ailleurs, afin d'éviter toute fuite de fluide dans des zones non souhaitées, les plaques bipolaires 20 comportent également des joints ovales positionnés autour des orifices 30, 32 et 34 de circulation des fluides.

En référence à la figures 4, un moule 50 pour polymérisation des joints périphériques 36 et ovales 40 sur la plaque bipolaire 20 est représenté selon une coupe sur laquelle seul le joint périphérique est visible en coupe transversale. Selon d'autres coupes possibles non représentées, le joint périphérique et les joints ovales 40 seraient également visibles.

Le moule 50 est à double coque et comporte ainsi une première coque 51 et une deuxième coque 52. La première coque 51 possède une première surface intérieure 54 et la deuxième coque possède une deuxième surface intérieure 56. La première et la deuxième coques 51 et 52 peuvent être assemblées l'une à l'autre en positionnant la première surface intérieure 54 en regard de la deuxième surface intérieure 56 de sorte à délimiter une cavité 58 pouvant accueillir la plaque bipolaire 20a.

La première et la deuxième coques 51 et 52 sont formées en un matériau principal qui est recouvert, sur au moins une partie de la première et/ou de la deuxième surfaces intérieures 54 et 56, par un revêtement 62 formé en un matériau d'amortissement. Le matériau d'amortissement possède une dureté inférieure à la dureté du matériau principal.

Ainsi, lorsque la plaque bipolaire 20 est positionnée dans la cavité 58, une pression peut être exercée sur la première et/ou la deuxième coques 51 et 52 sans risquer d'endommager la plaque bipolaire 20. En effet, la pression exercée sur la première et la deuxième coques 51 et 52 lors de la polymérisation des joints est partiellement amortie par le revêtement 62 et la pression exercée par la première et/ou la deuxième coques 51 et 52 sur la plaque bipolaire 20 est ainsi amoindrie.

Par ailleurs, le revêtement 62 permet que les joints à polymériser ne soient pas déformés et/ou écrasés par la première et /ou la deuxième coque(s). Il est ainsi possible de déposer une composition pour joint sur la plaque bipolaire et de le polymériser tout en permettant au joint d'avoir la forme et/ou l'épaisseur voulue.

Le matériau principal possède une rigidité suffisante de sorte que la première et/ou le deuxième coque(s) 51 et 52 gardent leur forme malgré la pression exercée lors de la polymérisation au moyen du moule et que la pression soit transmise de manière homogène sur une grande partie, voire la totalité, de la première surface intérieure 54 et/ou de la deuxième surface intérieure 56.

De préférence, le matériau d'amortissement ne possède pas de propriété d'adhésion avec le matériau composant les joints périphériques 36 et ovales 40, que ce soit avant, pendant ou après polymérisation. De préférence, le matériau d'amortissement est différent du matériau composant les joints. Les joints 36 et 40 peuvent par exemple être réalisés en fluorosilicone et le matériau d'amortissement est alors de préférence un matériau autre que le fluorosilicone. Ainsi, le matériau d'amortissement ne risque pas de se coller sur les joints 36 et 40 ou de fusionner avec ces derniers. De même, les joints 36 et 40 ne risquent pas de rester collés au matériau d'amortissement ou de fusionner avec ce dernier. Ainsi, une fois la polymérisation terminée, la première et la deuxième coques 51 et 52 peuvent être dissociées de la plaque bipolaire 20 et des joints 36 et 40 en laissant le revêtement 62 d'amortissement et les joints 36 et 40 intègres.

De préférence, le matériau d'amortissement formant le revêtement 62 présente une dureté allant de 35 à 65 shore A. Une telle dureté permet au matériau d'amortissement d'être suffisamment rigide pour donner au joint la forme voulue et suffisamment souple pour absorber une partie de la pression exercée par la première et la deuxième coques 51 et 52 sur la plaque bipolaire 20 de sorte que la plaque bipolaire ne soit pas endommagée.

La dureté peut notamment être mesurée selon la norme ISO7619-1.

Le matériau d'amortissement peut comporter au moins un élastomère, et notamment un élastomère choisi parmi les silicones, les flurosilicones, les téflons, les polyurethanes, caoutchouc d'éthylène-propylène-diène monomère (ou d'EPDM), les nitriles, les néoprènes, ou un de leurs mélanges.

Lorsque le matériau d'amortissement comporte au moins un silicone, ledit silicone peut être choisi parmi le caoutchouc de silicone liquide (connu sous l'anglicisme « liquid silicone rubber », LSR) ou le caoutchouc de silicone à haute consistance (connu sous l'anglicisme « high consistency rubber », HCR).

Le revêtement est de préférence positionné au moins sur les zones de la première et de la deuxième surfaces intérieures 52 et 54 qui sont au contact avec le(s) joint(s) à polymériser et/ou avec des parties fragiles de la plaque bipolaire 20. Selon une variante possible, le revêtement 62 peut couvrir des zones plus étendues, comme par exemple toute la première surface intérieure 54 et toute la deuxième surface intérieure 56.

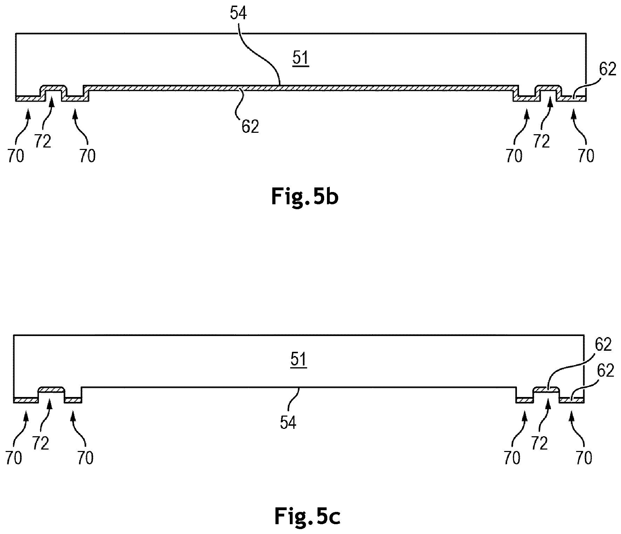

Comme illustré sur les figures 5a, 5b et 5c, le revêtement peut être disposé selon différentes variantes de réalisation.

Selon une première variante illustrée sur la figure 5a, le revêtement peut être positionné à la surface des nervures 70 qui font saillies à partir de la surface intérieure 54 de la première coque 51 et/ou de la deuxième coque 52. Ces premières parties sont celles qui sont en contact avec des portions fines et fragiles de la plaque bipolaire et le revêtement 62 permet ainsi que ces portions fines et fragiles de la plaque ne soient pas endommagées.

Selon une deuxième variante illustrée sur la figure 5b, le revêtement peut être positionné sur toute la surface intérieure 54 (56) de la première coque 51 et/ou de la deuxième coque 52, et notamment sur les surfaces horizontales et verticales, les surfaces horizontales étant celles qui sont parallèles au plan formé par la plaque bipolaire 20 lorsque cette dernière est placée dans la cavité 58 et les surfaces verticales étant celles qui sont perpendiculaires au plan formé par la plaque bipolaire 20. Ainsi, toutes les zones des joints périphériques 36 et de la plaque bipolaires 20 sont protégés d'une trop forte pression par le revêtement 62.

Selon une troisième variante de réalisation illustrée sur la figure 5c, le revêtement 62 peut être positionné uniquement sur les surfaces horizontales des nervures 70 et du sillon 72. Ainsi, le revêtement 62 protège les zones qui exercent la plus grande pression sur la plaque bipolaire 20 et le joint périphérique 36.

Les figures 5a, 5b et 5c se réfèrent à une coupe de la première coque 51 selon laquelle seul le sillon 72 pour le joint périphérique 36 est visible. Cependant, la description des variantes et leurs avantages s'appliquent également aux sillons correspondants aux joints ovales 40 et qui ne sont pas représentés sur les figures.

De préférence, la première et la deuxième coques 51 et 52 possèdent toutes deux le revêtement 62, ce dernier étant de préférence identique sur la première et la deuxième coques 51 et 52.

En outre, l'épaisseur du revêtement 62 peut aller de 0,3 à 10 mm. Une telle épaisseur permet au revêtement 62 d'avoir une capacité d'amortissement suffisante. L'épaisseur peut notamment être choisie notamment en fonction des propriétés du matériau d'amortissement, en particulier de sa dureté. L'épaisseur peut notamment être plus importante pour une faible dureté et moins importante pour une dureté plus élevée.

Selon un mode de réalisation possible, le revêtement 62 peut comporter une première épaisseur sur une ou des portion(s) qui sont au contact de la plaque bipolaire 20 lorsque cette dernière est positionnée dans la cavité 58, et une deuxième épaisseur sur une ou des portions qui sont au contact les joints périphériques 36 et ovales 40 à polymériser. Selon ce mode de réalisation la première épaisseur est supérieure à la deuxième épaisseur. L'épaisseur est ainsi plus importante lorsque le revêtement 62 est destiné à être placé directement contre la plaque bipolaire 20 et moins importante lorsque les joints périphériques 36 et ovales 40 sont positionnés entre le revêtement 62 et la plaque bipolaire 20 et que les joints 36 et 40 contribuent alors à amortir une partie de la pression exercée par la première et la deuxième coques 51 et 52 sur la plaque bipolaire 20.

Le procédé de formation et de polymérisation des joints périphériques 36 et ovales 40 sur la plaque bipolaire 20 au moyen du moule 50 comprend les étapes suivante :
- déposer les joints périphériques 36 et ovales 40 sur au moins une de la première face 64 et de la deuxième face 66 de la plaque bipolaire 20, de préférence sur la première et la deuxième face 64 et 66,
- positionner la première coque 51 au contact de la première face 64 et la deuxième coque 52 au contact de la deuxième face 66 de sorte que la plaque bipolaire soit positionnée dans la cavité 58 délimitée par la première coque 51 et la deuxième coque 52, et
- appliquer une pression P, de préférence sur la première et sur la deuxième coques 51 et 52 de manière à presser simultanément la première coque 51 contre la première face 64 et la deuxième coque 52 contre la deuxième face 66 pour permettre la polymérisation des joints périphériques 36 et ovales 40.

Le procédé permet de polymériser les joints périphériques 36 et ovales 40 déposés sur la plaque bipolaire 20 en leur conférant la forme et/ou l'épaisseur voulue, et ce, tout en évitant d'endommager la plaque bipolaire.

Selon un mode de réalisation, la cavité 58 accueillant la plaque bipolaire 20 peut être soumise à une température d'au moins 100°C lorsque la pression P est exercée pour la polymérisation des joints périphériques 36 et ovales 40. Une telle température permet une polymérisation optimisée des joints).

Avantageusement, le matériau d'amortissement résiste à des températures allant de 100 à 180 °C et n'est pas endommagé lors du procédé. La première et la deuxième coques 51 et 52 peuvent ainsi être réutilisées un grand nombre de fois.

Par ailleurs, la pression P appliquée sur chacune de la première coque 51 et de la deuxième coque 52 présente une valeur allant de 500 Kg à 10000 Kg, de préférence de 1000 Kg à 3000 Kg. Une telle pression est permise par la dureté du matériau principale et permet une polymérisation optimisée des joints périphériques 36 et ovales 40 tout en leur conférant la forme et l'épaisseur voulue, et ce, sans endommager la plaque bipolaire 20.

Dans le mode de réalisation qui vient d'être décrit, le moule est décrit pour la polymérisation d'un joint sur une plaque bipolaire. Cependant, le moule 50 peut également être utilisé pour la polymérisation d'un joint sur tout type de plaque métallique.

## Revendications

1. Procédé de formation et polymérisation d'un joint sur une plaque métallique au moyen d'un moule double coque (50), la plaque métallique (20) comportant une première face (64) et une deuxième face (66) opposée à la première face et le moule double coque (50) comportant au moins une première coque (51) possédant une première surface intérieure (54) et une deuxième coque (52) possédant une deuxième face intérieure (56), la première coque (51) et la deuxième coque (52) étant configurées pour pouvoir être jointes l'une à l'autre en positionnant la première surface intérieure (54) et la deuxième surface intérieure (56) en vis-à-vis de sorte à délimiter une cavité (58) pouvant accueillir la plaque métallique (20), la première coque (51) et la deuxième coque (52) étant formées en un matériau principal et, au moins une de la première coque (51) et de la deuxième coque (52) comportant, sur au moins une partie de sa surface intérieure (54, 56), un revêtement (62) formé en un matériau d'amortissement possédant une dureté inférieure à la dureté du matériau principal, le procédé comprenant les étapes suivantes :
- déposer le joint (36, 40) sur au moins une de la première face (64) et de la deuxième face (66) de la plaque métallique (20),
- positionner la première coque (51) au contact de la première face (64) et la deuxième coque (52) au contact de la deuxième face (66) de sorte que la plaque métallique (20) soit positionnée dans la cavité (58) délimitée par la première coque (51) et la deuxième coque (52), et
- appliquer une pression de manière à presser simultanément la première coque (51) contre la première face (64) et la deuxième coque (52) contre la deuxième face (66) pour permettre la polymérisation du joint (36, 40).

2. Procédé selon la revendication 1, dans lequel la cavité (58) accueillant la plaque métallique (20) est soumise à une température d'au moins 100° C lorsque la pression est exercée pour la polymérisation du joint (36, 40).

3. Procédé selon la revendication 1 ou 2, dans lequel la pression appliquée sur chacune de la première coque (51) et de la deuxième coque (52) présente une valeur allant de 500Kg à 10000Kg, de préférence de 1000Kg à 3000Kg.

4. Procédé selon l'une quelconque des revendications précédentes, dans lequel la plaque métallique est une plaque bipolaire pour pile à combustible.

5. Procédé selon l'une quelconque des revendications précédentes, dans lequel le matériau d'amortissement comporte au moins un élastomère.

6. Procédé selon l'une quelconque des revendications précédentes, dans lequel le matériau d'amortissement présente une dureté allant de 35 à 65 shore A.

7. Procédé selon l'une quelconque des revendications précédentes, dans lequel le revêtement possède une épaisseur allant de 0,3 à 10 mm.

8. Procédé selon l'une quelconque des revendications précédentes, dans lequel le revêtement (62) comporte une première portion possédant une première épaisseur, la première portion étant configurée pour être au contact de la plaque métallique (20) lorsque la plaque métallique est accueillie dans la cavité (58), et une deuxième portion possédant une deuxième épaisseur, la deuxième portion étant configurée pour être au contact du joint à polymériser (36, 40) lorsque la plaque métallique (20) présente dans la cavité (58) comporte le joint (36, 40) à polymériser, la première épaisseur étant supérieure à la deuxième épaisseur.

9. Procédé selon l'une quelconque des revendications précédentes, dans lequel l'une et l'autre de la première coque (51) et la deuxième coque (52) possèdent le revêtement (62) en un matériau d'amortissement.

10. Procédé selon la revendication 9, dans lequel le revêtement de la première coque (51) est identique au revêtement de la deuxième coque (52).
